# EUROPEAN PATENT APPLICATION

(11) **EP 4 756 646 A1**
(43) Date of publication of application: **10.06.2026**
(21) Application number: 25196269.2
(22) Date of filing: 15.08.2025
(51) Int. Cl.: G06F 16/9032, G06F 16/332, G06F 16/335, G06F 16/338

(54) **SYSTEMS AND METHODS FOR ISOLATED AI AGENTS AND FILES**

(30) Priority: 19.09.2024 US 202418890395
(71) Applicant: Microsoft Technology Licensing, LLC, Redmond, WA 98052 (US)
(72) Inventor: ADAMS, WILLIAM CALVIN, Redmond, 98052 (US); CASSINAT, CRAIG ANTHONY, Redmond, 98052 (US); YIN, JIANPING, Redmond, 98052 (US); LI, MEISHAN, Redmond, 98052 (US)
(74) Representative: CMS Cameron McKenna Nabarro Olswang LLP

(57) **Abstract**

A first AI agent is configured to obtain grounding information (e.g., information that will be used, by the first AI agent, to formulate a response to a query) from a first set of files and/or embeddings in a container associated with the AI agent. A second AI agent is configured to obtain grounding information from a second set of files and/or embeddings in a second container. Neither AI agent has access to files that are outside of the container associated with the AI agent. The container may be a folder into which a user can drag and drop files, and therefore the user may have visibility into (and control over) the information that is used as grounding information for each of the AI agents. An AI agent can be nested within a container for another AI agent to provide additional grounding information.

## Description

### BACKGROUND

Artificial intelligence (AI) models are increasingly prevalent. Because of their high computational demands, many AI models are hosted in the cloud. Users may have concerns about data privacy when using remote AI models, however. In addition, users may not have visibility into where the AI model obtained the information that was used by the model to formulate a response to a query or how information provided to the AI model is used and/or stored.

It is with respect to these and other considerations that examples are presented herein. In addition, although relatively specific problems have been discussed, it should be understood that the examples should not be limited to solving the specific problems identified in the background.

### SUMMARY

Examples described in this disclosure relate to systems and methods for isolated AI agents and files. A first AI agent is configured to obtain grounding data (e.g., information that will be used, by the AI agent, to formulate a response to a query) from a first set of files in a first isolated container associated with the first AI agent. A second AI agent is configured to obtain grounding information from a second set of files in a second container associated with the second AI agent. Neither AI agent has access to files in the container of the other AI agent, nor to any other files outside of the container associated with the AI agent. In some examples, the container is a folder into which a user can drag and drop files, and therefore the user has visibility into (and control over) the information that is used as grounding information for each of the AI agents.

In some examples, AI agents and containers may be nested. For example, a first container associated with a first AI agent (e.g., containing files that provide grounding information for the first AI agent) may contain a nested, second AI agent and a second container associated with the second AI agent. An orchestrator is configured to determine whether to obtain grounding information from files in the first container and/or to generate a prompt for the second AI agent, thereby obtaining grounding information from the second AI agent based on the second set of files.

In some examples, deleting an AI agent also deletes the associated container (and/or vice versa) and any other containers and AI agents that are nested within the associated container. In this manner, the user maintains control over the information that is used as grounding information, has visibility into which information was used as grounding information, and can readily delete any such information as needed.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

### BRIEF DESCRIPTION OF THE DRAWINGS

The present disclosure is illustrated by way of example by the accompanying figures, in which like references indicate similar elements. Elements in the figures are illustrated for simplicity and clarity and have not necessarily been drawn to scale.
FIG. 1 depicts a system for isolated AI agents and files in accordance with some examples;
FIG. 2 depicts a system for isolated AI agents and files in accordance with some examples;
FIG. 3 depicts a flowchart of an example method for isolated AI agents and files in accordance with some examples;
FIG. 4 depicts a flowchart of an example method for isolated AI agents and files in accordance with some examples;
FIGs. 5A-5B depict a flowchart of an example method for isolated AI agents and files in accordance with some examples; and
FIG. 6 is a block diagram illustrating example physical components of a computing device with which aspects of the disclosure may be practiced.

### DETAILED DESCRIPTION

Examples described in this disclosure relate to systems and methods for isolated AI agents and files. Generative AImodels are increasingly used to provide information to users. Such AI models typically require a large amount of computational and storage resources. As a result, many AI models are hosted on servers in the cloud. In this case, a user submits a query on a locally hosted user interface, and the query (or a prompt containing the query) is sent to a remote AI model in the cloud. A response from the AI model is ultimately received at the user's computing device. The AI model may respond to the query using grounding information that is obtained, by the AI model, from many different sources on the Internet. In some cases, an AI model "hallucinates" information and provides erroneous responses. In some cases, cloud-based AI models and/or the entities hosting such models may also retain data entered as queries or prompts to use as training data for the model or other purposes. Due the remote nature of the AI models and the lack of visibility into the data processing associated with generating the responses to the queries, concerns have arisen regarding data privacy, answer accuracy, and grounding sources used in generating responses, among other concerns.

The technology disclosed herein addresses these and other concerns by providing for localized AI agents that operate locally on a user's device and provide both transparency and control over the grounding data used by the AI models through isolated file sets. As described herein, a local, isolated AI agent uses files in a container associated with the AI model to generate responses to queries. A user determines which files are in the container and therefore controls the information sources that are used by the AI agent to obtain grounding information. The AI agent operates locally so the user's data is not provided to (or used to train) a remote AI model.

For example, a first AI agent on a computing device is configured to obtain grounding information (e.g., information that will be used, by the AI agent, to formulate a response to a query) from a first set of files in a first container to respond to user queries. A second AI agent on the computing device is configured to obtain grounding information from a second set of files in a second container to respond to user queries. Neither AI agent has access to files in the container of the other AI agent, nor to any other files outside of the container associated with the AI agent.

The containers themselves may be directly configured, populated, and/or viewed directly. For instance, the containers may be adjusted through a graphical user interface (GUI) in a form of windowed folders, among other interfaces. In some examples, the container is a folder into which a user can drag and drop files or another type of container with which the user can explicitly associate files, and therefore the user has visibility into (and control over) the information that is used as grounding information for the AI agents. During operation, the user inputs a query and specifies the particular AI agent and/or container to be used for responding to the query.

In some examples, AI agents and containers may be nested. For example, a first container associated with a first AI agent (e.g., containing files that provide grounding information for the first AI agent) may also contain a second AI agent and a second container associated with the second AI agent. An orchestrator (e.g., a control program) is configured to determine whether to obtain grounding information from files in the first container and/or to generate a prompt for the second AI agent, thereby obtaining grounding information from the second AI agent based on the second set of files.

In some examples, deleting an AI agent also deletes the associated container (and/or vice versa) and any other containers and AI agents that are nested within the associated container. In this manner, the user can maintain control over the information that is used as grounding information and have visibility into which information was used as a source for grounding information. Accordingly, once an AI agent is deleted, confidence is instilled that the associated AI model and associated cannot be used again.

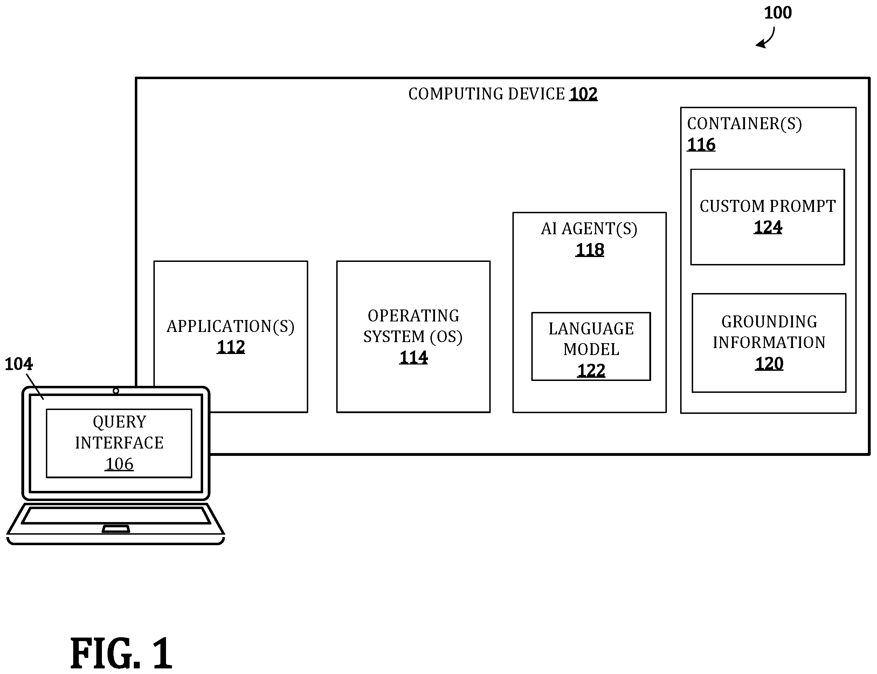

Additional details regarding systems and methods for isolated AI agents and files are described with reference to FIGs. 1-6.

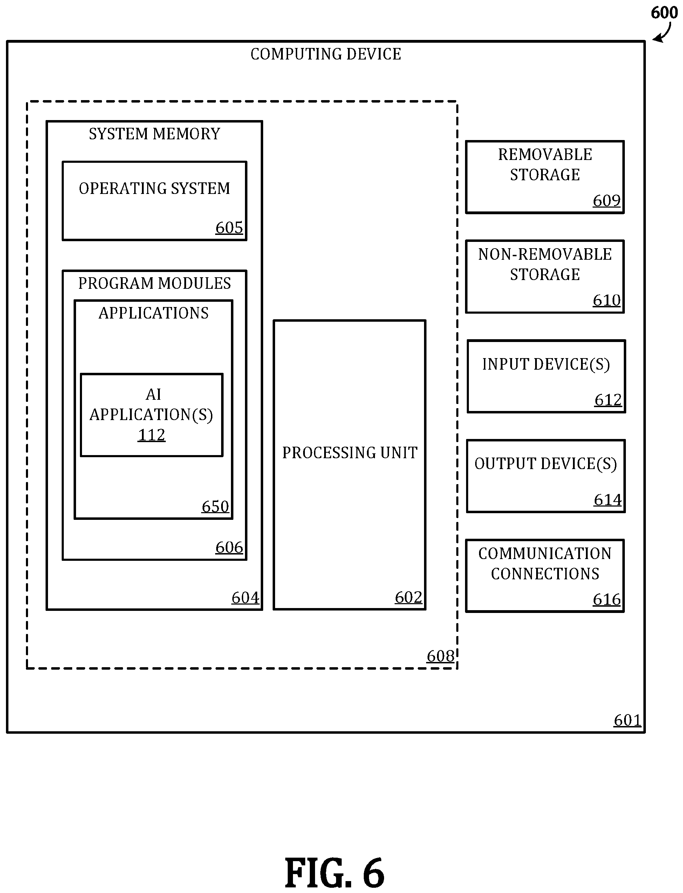

FIG. 1 is a block diagram of an example system 100 for isolated AI agents and files. The example system 100, as depicted, is a combination of interdependent components that interact to form an integrated whole. Some components of the system 100 are illustrative of software applications, systems, or modules that operate on the computing device. Any suitable computer device(s) may be used, including a personal computer, local area network (LAN) servers, a system-on-a-chip (SOC), or any combination of these and/or other computing devices known in the art. In one example, components of systems disclosed herein are implemented on a single processing device. The processing device may provide an operating environment for software components to execute and utilize resources or facilities of such a system. An example of processing device(s) (such as may be or may be included in a processing system) comprising such an operating environment is depicted in FIG. 6.

The example system 100 includes a computing device 102. The computing device 102 may take a variety of forms, including, for example, a desktop computer, laptop, tablet, smart phone, wearable device, gaming device/platform, virtualized reality device/platform (e.g., virtual reality (VR), augmented reality (AR), mixed reality (MR)), etc. The computing device 102 has an operating system 114 that provides a graphical user interface (GUI) that allows users to interact with the computing device 102 via graphical elements, such as application windows (e.g., display areas), buttons, icons, and the like. For example, the graphical elements are displayed on a display screen 104 of the computing device 102 and can be selected and manipulated via user inputs received via a variety of input device types (e.g., keyboard, mouse, stylus, touch, spoken commands, gesture).

In the example of FIG. 1, display 104 displays a query interface 106 (e.g., a user interface (UI)) generated by an application 112 and/or by an operating system 114 operating on the computing device 102. The query interface 106 may be an application UI or operating system UI that includes a text input field for receiving a natural language user query and visual element(s) for selecting an AI agent and/or a container with which to respond to the user query.

The computing device 102 includes one or more containers 116, each of which is associated with an AI agent 118. The containers may include a custom prompt 124 for the AI agent 118 and grounding information 120 (e.g., files) that are accessed by the AI agent 118. The AI agent 118 performs tasks that enable the AI agent 118 to respond to user queries. The AI agent 118 may provide chatbot functionality, for example, that receives queries and generates responses.

The grounding information 120 may be information that the AI agent 118 uses to formulate responses to queries and may include text files and/or embedding vectors representing content in the text files. The container(s) 116 may be or may include file folders, for example, or other types of logical associations between various AI agents 118 and files used to provide the grounding information 120. The container(s) 116 may include the software, data, and/or files used to execute the AI agent (including the grounding information 120 used by the AI agent 118). The custom prompt 124 includes instructions to the AI agent 118 for how the AI agent 118 should respond to subsequent queries received via the query interface.

The AI agent 118 includes a language model 122, such as a large language model (LLM) or a small language model (SLM). The language model 122 may be a generative AI model, such as the Phi-3 models from Microsoft, GPT models from OpenAI, BARD from Google, and/or LLaMA from Meta, among other types of generative AI models. The language model 122 may be configured to receive prompts and generate responses. The response may be generated using the grounding information 120 or may be generated without the use of grounding information 120 (e.g., without using any information that is external to the AI agent 118). In some examples, the response is a text-based response (e.g., natural language text), In some examples, the language model 122 may include support for other response modalities, such as support for generating images or video outputs.

According to example implementations, the language model 122 is trained to understand and generate sequences of tokens, which may be in the form of natural language (e.g., human-like text). In various examples, the language model 122 can understand complex intent, cause and effect; perform language translation, semantic search classification, complex classification, text sentiment, summarization, summarization for an audience; and/or execute other natural language capabilities.

In some examples, the language model 122 is in the form of a deep neural network that utilizes a transformer architecture to process the text it receives as an input or query. The neural network may include an input layer, multiple hidden layers, and an output layer. The hidden layers typically include attention mechanisms that allow the language model 122 to focus on specific parts of an input, and to generate context-aware outputs. The language model 122 is generally trained using supervised learning based on large amounts of annotated text data and learns to predict the next word or the label of a given text sequence.

The size of a language model 122 may be measured by the number of parameters it has. For instance, as one example of an LLM, the GPT-4 model from OpenAI has billions of parameters. In contrast, an SLM may have a few million parameters. The parameters may be weights in the neural network that define its behavior, and larger numbers of parameters allow the model to capture more complex patterns in the training data. The training process typically involves updating these weights using gradient descent algorithms, and is computationally intensive, requiring large amounts of computational resources and a considerable amount of time. The language model 122 in examples herein, however, is pre-trained, meaning that the language model 122 has already been trained on the large amount of data. This pre-training allows the model to have a strong understanding of the structure and meaning of an input, which makes it more effective for the specific tasks discussed herein.

The language model 122 may operate as a transformer-type neural network. Such an architecture may employ an encoder-decoder structure and attention mechanisms to process the input (e.g., the text, image description and/or contextual history). Initial processing of the input data may include tokenizing the input into tokens that may then be mapped to unique integers or mathematical representations. The integers or mathematical representations are combined into vectors that may have a fixed size. These vectors may also be known as embeddings.

The initial layer of the transformer model receives the token embeddings. Each of the subsequent layers in the model may use a self-attention mechanism that allows the model to weigh the importance of each token in relation to every other token in the input. In other words, the self-attention mechanism may compute a score for each token pair, which signifies how much attention should be given to other tokens when encoding a particular token. These scores are then used to create a weighted combination of the input embeddings.

In some examples, each layer of the transformer model comprises two primary sub-layers: an attention (e.g., self-attention, windowed attention, or another type of attention) sub-layer and a feed-forward neural network sub-layer. The self-attention mechanism mentioned above is applied first, followed by the feed-forward neural network. The feed-forward neural network may be the same for each position and apply a simple neural network to each of the attention output vectors. The output of one layer becomes the input to the next. The output of the final layer may be processed and passed through a linear layer and a SoftMax activation function. This outputs a probability distribution over all possible tokens in the model's vocabulary. The token(s) with the highest probability is selected as the output token(s) for the corresponding input token(s).

The grounding information 120 may include information from one or more files selected by a user, and/or associated embeddings representing text in the one or more files. In some examples, the embeddings are generated by the computing device 102 in response to the user adding a file to the container 116. The embeddings may be stored as an embeddings database or store in addition to the files themselves within the container 116.

The custom prompt 124 may be a prompt for the AI agent 118 may be used as a prompt template for further queries and/or an initialization prompt that prepares the AI agent 118 and the language model 122 to receive user queries and respond to them in a customized manner. For instance, the custom prompt 124 may include static text with instructions for how the language model is to process the user queries that are received. The custom prompt 124 may include a placeholder for the query text that is populated when a query is received from the user. In some examples, the custom prompt 124 provides a listing of the files and/or a description of the files within the container to which the custom prompt 124 belongs.

The custom prompt 124 may be provided to the AI agent 118 when the AI agent 118 is invoked (e.g., at startup) and/or each time the AI agent 118 receives a user query. Accordingly, the language model 122 is able to use the information in the custom prompt as context when generating the responses.

In some examples, the AI agent 118 includes a prompt generator that generates a prompt for the AI agent 118 based on the user query. For example, the prompt may include natural language text entered by the user in the query interface 106. Generation of the prompt may include accessing a prompt template that includes static text and dynamic placeholders. The static text may include instructions for how the language model is to perform. For example, the static text may include instructions, such as: "A question is provided below relating to advanced physics. Answer the question as a person holding an advanced degree in physics and several years of work in the field." The dynamic placeholders may include a placeholder for the text from a text input field of the query interface 106 (e.g., the user query).

The AI agent 118 may initially receive the custom prompt as a "priming" prompt to prepare the AI agent 118 to respond to subsequent user queries. The AI agent 118 may generate a second prompt based on a received user query. The language model 124 processes the second prompt and generate a response to the user query based on the second prompt.

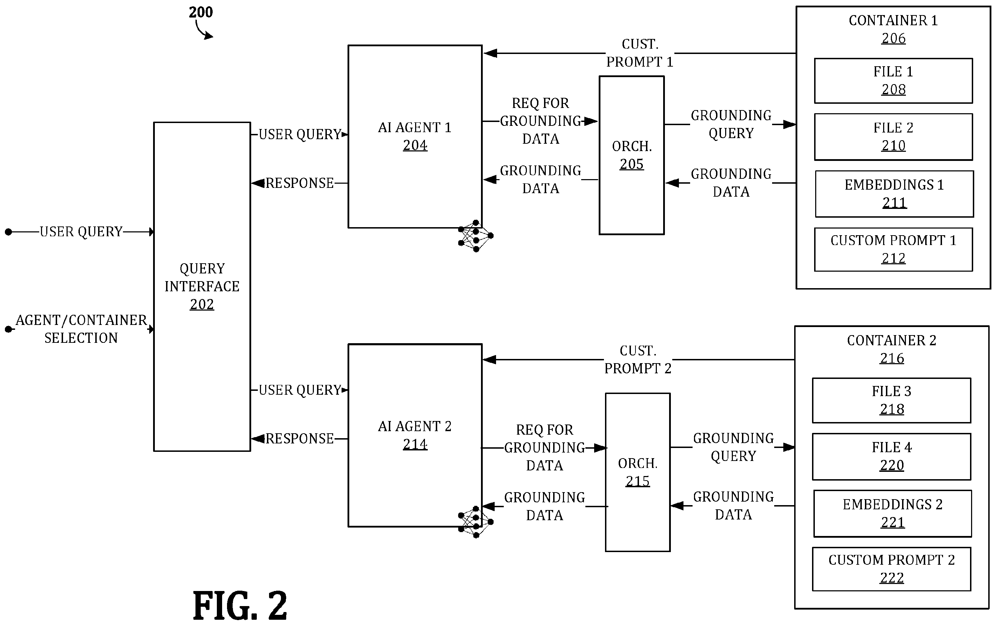

FIG. 2 is a block diagram of an example system 200 for isolated AI agents and files. System 200 may be included in a computing device such as computing device 102. System 200 includes a query interface 202 that is a user interface configured to receive user queries (e.g., as text inputs, voice inputs, or another type of natural-language input, and in some examples, as input images or videos that can be analyzed to extract natural language text).

The system 200 includes two containers (a first container 206 and a second container 216), each of which is associated with an AI agent (a first AI agent 204 and a second AI agent 214, respectively). That is, the first AI agent 204 uses the first container 206 to obtain grounding information (when needed), and the second AI agent 214 uses the second container 216 to obtain grounding information (when needed). The first AI agent 204 and second AI agent 214 may be examples of the AI agent 118 discussed with reference to FIG. 1 and may each include a language model. The language model of the first AI agent 204 may have been trained with the same or similar training set as the language model of the second AI agent 214 or may have been trained using a different training data set.

Each of the AI agents 204, 214 may include or be in communication with a corresponding orchestrator (e.g., a first orchestrator 205 or a second orchestrator 215). The orchestrators 205, 215 may be responsible for managing interactions between the AI agents 204, 214 and the containers 206, 216, among other components, such as by generating search queries for files in the containers 206, 216 based on outputs of the AI agent 204, 214. The orchestrators may also be responsible for prompt generation (e.g., generation of prompts for the AI agents 204, 214), handling of inputs and outputs from the language model, and/or for formatting responses from the AI agents 204, 214 for presentation in the query interface 202.

The query interface 202 is configured to receive a user query and an indication of an AI agent and/or container that should be used to respond to the user query. For example, a user may provide an input indicating an AI agent and/or a container by inputting text and/or by selecting the AI agent and/or container from a dropdown menu. If the user selects a container, then the AI agent associated with that container is also selected. For example, if the user selects the first container 206, the first AI agent 204 is used to respond to the query. In this manner, the user can control which AI agent and which files are used to respond to the user query.

In the example depicted, the first container 206 includes a first file 208, a second file 210, a first set of embeddings 211, and a first custom prompt 212. Similarly, the second container 216 includes a third file 218, a fourth file 220, a second set of embeddings 221, and a second custom prompt 222. The first set of embeddings 211 includes embeddings representing some or all of the content in the first file 208 and the second file 210. The second set of embeddings includes embeddings representing some or all of the content in the third file 218 and the fourth file 219. The first container 206 is associated with the first AI agent 204 and the second container 216 is associated with the second AI agent 214. For example, the first AI agent 204 has been granted permission to access the files and embeddings in the first container 206, and the second AI agent has been granted permission to access the files and embeddings in the second container 216. The files 208, 210, 218, 220 and sets of embeddings 211, 221 each contain grounding information, such as text and/or embeddings representing text.

In some examples, the container 206, 216 may be a virtual file folder. In some examples, the user can select files to add to a container 206, 216 by dragging and dropping the files (or pointers to the files) into the container. In some examples, in response to detecting an addition of a file to a folder 206, 216, the computing device generates one or more embeddings based on the additional file and saves the one or more embeddings in the folder 206, 216.

In some examples, in response to detecting the addition of a file(s) to a container, the computing device generates (or updates) the set of embeddings for that container, and/or generates or updates a custom prompt (e.g., custom prompt 212, 222) that is appropriate for the particular files in the container. In some examples, the custom prompt is updated based on the files in the container. For instance, the custom prompt may include a listing of the files within the container and/or a description of the files or types of files that are stored within the container. In some examples, the custom prompt is updated based on the addition or deletion of a file in the container.

The containers 206, 216 may contain additional files, and/or that the system 200 may include additional AI agents and/or additional containers having additional files and custom prompts.

In operation, the query interface 202 receives a user query (e.g., as inputs on a keyboard, as a voice input, or in another manner) and an indication or selection of an AI agent. The indication of the AI agent or container is used by the computing device to determine which AI agent 204, 214 and container 206, 216 will be used to respond to the user query. In response to receiving a user query and an indication of the selection of the first container 206, the computing device provides the user query to the first AI agent 204. In response to receiving the user query, the first AI agent 204 may cause the first orchestrator 205 to search one or more files in the first container 206 to identify grounding information that can be used, by the first AI agent 204, to generate a response to the user query. For example, the selected AI agent receives the user query, which is provided as input to the language model of the AI agent. The language model processes the user query and generates an output. The output may then be analyzed by the AI agent or the orchestrator to determine how the output should be processed. In some instances, the output indicates that grounding data should be obtained to fully respond to the user query. In such cases, the output includes a search query (referred to herein as a grounding query) that is to be executed over the grounding information in the respective container. This grounding query is extracted from the orchestrator 205 which calls a search function to execute the grounding query over the grounding information in the respective container. The grounding data that matches the search query is then returned to the orchestrator 205. The grounding data is then incorporated into a second prompt that also includes the user query. That second prompt may be generated by the orchestrator 205 and/or the AI agent 204. The second prompt is provided as input to the language model, which processes the second prompt to generate an output.

The output may then be again analyzed by the orchestrator to determine if a subsequent response should be generated or if the output includes a response that is ready to be surfaced to the user. If the output includes the response, the response is then transmitted to the query interface 202 where the response is surfaced (e.g., displayed). It should be understood that not all user queries require the use of grounding information. For example, if the user query is "what is 2+2" the language model is capable of responding to this query without obtaining grounding information from the first container 206.

Similarly, if the user enters a query in the query interface 202 and selects the second container 216 instead of the first container 206 (and/or selects the second AI Agent 214 instead of the first AI Agent 204), the computing device provides the user query to the second AI agent 214 instead of the first AI agent 204. The second AI agent 214 and associated component performs similar actions as described above for the first AI agent 204 but using only the data within the second container 216 for grounding data.

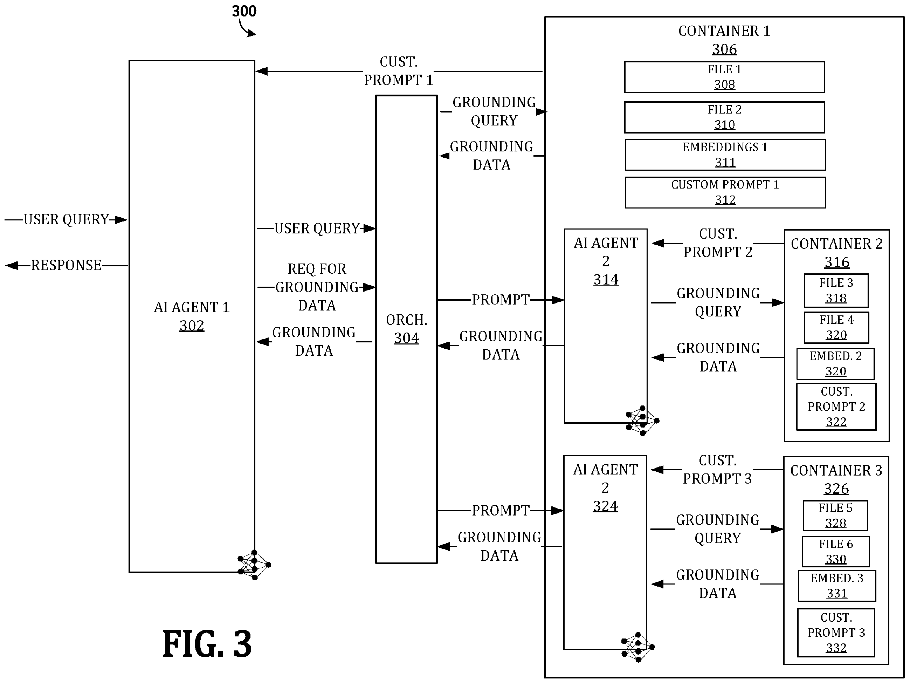

FIG. 3 is a block diagram of an example system 300 for isolated AI agents and files. System 300 may be included in a computing device such as computing device 102.

The system 300 includes a first AI agent 302 that is associated with a first container 306. The first container 306 includes a first file 308, a second file 310, a first set of embeddings 311, and a first custom prompt 312. The first container 306 also includes nested AI agents and nested containers, as described in more detail below.

The first AI agent 302 is configured to generate responses to user queries in a manner similar to that described with respect to the first AI agent of FIG. 2, but in the example of FIG. 3, an orchestrator 304 may initially request grounding data from the first file and the second file (in a manner similar to that described with reference to FIG. 2), and may determine whether to request additional grounding information from nested second and third AI agents 314, 324 that are included in the first container 306.

The second AI agent 314 is associated with a second container 316, and the third AI agent 324 is associated with a third container 326. The second container 316 includes a third file 318, fourth file 320, a second set of embeddings 320, and a second custom prompt 322. The third container 326 includes a fifth file 328, sixth file 330, a third set of embeddings 331, and a third custom prompt 332. In some examples, the second AI agent and/or third AI agent can be used to collect additional grounding information for the first AI agent 302. The first custom prompt 312 may also include data indicating the presence or availability of the nested AI agents 314, 324.

The orchestrator 304 has similar functionality as described with reference to orchestrators 205, 215. The orchestrator 304 receives the output from the language model of the first AI Agent 302 that is generated from processing the user query. Based on that output and/or the user query, the orchestrator 304 determines how that output should be further processed. For instance, the orchestrator 304 determines whether next operations should include one or more of: (1) surfacing a response to the user; (2) executing a grounding query over the grounding data within the first container 306; and/or (3) generating another prompt for processing by a nested AI agent of the first container 306 (e.g., the second AI agent 314 and/or the third AI agent 324) to obtain additional grounding data.

For instance, the orchestrator 304 may process the output from the first AI agent 302 according to a set of heuristics and/or rules that indicate whether one or more of the above operations should be performed. Additionally or alternatively, the orchestrator 304 may leverage another machine learning model that processes the output to indicate which of the above operations are to be performed.

When the third operation is identified, the orchestrator 304 (and/or one the AI agents) generates the subsequent prompt based on the output received from the first AI agent 302. The subsequent prompt may include data from the output received from the first AI agent 302. The subsequent prompt may also include and/or be based on the custom prompt of one of the nested AI agents. For instance, when the subsequent prompt is intended for the second AI agent 314, the subsequent prompt may be based on the second custom prompt 322. The subsequent prompt is then processed by the nested AI agent and an output is generated. That output may be handled similarly as the output from the first AI agent 302, such as to extract grounding data from the data in the corresponding nested container. For instance, when the AI agent 314 is invoked, a grounding query based on the output from the second AI agent 314 may be executed to extract grounding data from the second container 316. In examples, the second AI agent 314 does not have access to the files of the first container 306 (e.g., file 308, file 310). Instead, the nested AI agents may only have access to their own dedicated or isolated containers (e.g., files 318, 320 for the second AI agent 314).

In an example of the operation of system 300, the first AI agent 302 may initially receive a first custom prompt 312 that includes instructions that prime the first AI agent 312 to respond to subsequent user queries. Similarly, the second AI agent 314 and third AI agent 312 may each receive a custom prompt 322, 332. A query interface (not shown) receives a user query (e.g., as a series of inputs on a keyboard, as a voice input, or in another manner). In response to receiving the user query, the system (e.g., a computing device) generates a prompt that includes the user query and provides the prompt to the first AI agent 302. In response to receiving the prompt, the first AI agent 302 generates an output that indicates a request for grounding information to the orchestrator 304, and the orchestrator determines whether to obtain grounding information by performing one or more of the following: (1) searching the files 308, 310 in the first container 306, (2) generating a prompt for the second AI agent 314 (which is associated with the second container 316), and/or (3) generating a prompt for the third AI agent 314 (which is associated with the third container 326).

In this manner, the orchestrator collects grounding information from one or more sources in the first container 306, which may include information in the first file 308 and/or second file 310, information received from the second AI agent 314 in response to a first prompt provided by the orchestrator 304, and/or information received from the second AI agent 314 in response to a second prompt provided by the orchestrator 304. The orchestrator 304 may provide the obtained grounding information (from the one or more sources) to the first AI agent 302, which may formulate a response to the query using the grounding information.

In some examples, if the user deletes the first container 306, the system 300 also deletes the first AI agent 302 (and vice-versa). In some examples, if the user deletes the second container 316, the system also deletes the second AI agent 314 from the first container 306 (and vice-versa). Similarly, if the user deletes the third container 326, the system also deletes the third AI agent 324 from the first container 306 (and vice-versa).

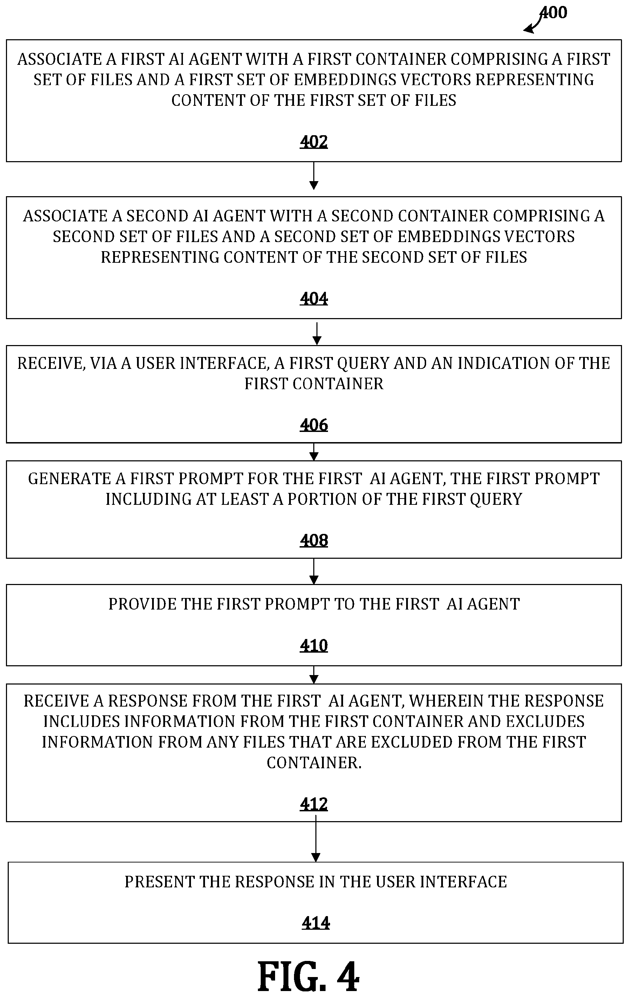

FIG. 4 is an example method 400 that may be used for or by isolated AI agents and files. Method 400 may be performed by a computing device, such as computing device 600.

At operation 402, the computing device associates a first AI agent (e.g., first AI agent 204) with a first container (e.g., first container 206) comprising a first set of files (e.g., first file 208 and second file 210) and a first set of embeddings (e.g., first set of embeddings 211) representing content of the first set of files. For example, the computing device associates the first AI agent with the first container by granting permission to the first AI agent to access the files and/or set of embeddings in the first container in response to detecting a user input associating the first AI agent with the first container. In some examples, the first set of embeddings is generated by a machine learning model that semantically analyzes the content in the first file and second file and generates embeddings that represent the semantic content.

At operation 404, the computing device associates a second AI agent (e.g., second AI agent 214) with a second container (e.g., second container 216) comprising a second set of files (e.g., third file 218 and fourth file 220) and a second set of embeddings (e.g., second set of embeddings 221) representing content of the second set of files. For example, the computing device grants permission to the second AI agent to access the files and/or sets of embeddings in the second container in response to detecting a user input associating the second AI agent with the second container. In some examples, the second set of embeddings is generated by a machine learning model that semantically analyzes the content in the third file and fourth file and generates embeddings that represent the semantic content.

At operation 406, the computing device receives, via a user interface (e.g., query interface 202), a first query and an indication of the first container. For example, the computing device receives the first query as a natural-language text string or as a verbal input that may be converted to a text string. The computing device may receive the indication of the first container by receiving an indication of a selection of an icon or menu item representing the first container, receiving an indication of a selection of the first container itself (e.g., by clicking on or providing a touch input on a representation of the first container), and/or receiving an indication of a selection of the first AI agent (e.g., the AI agent that is associated with the first container).

At operation 408, the computing device generates a first prompt for the first AI agent, where the first prompt includes at least a portion of the first query. For example, an orchestrator (e.g., orchestrator 205) generates the first prompt based on the first query. The first prompt may include data from the custom prompt stored within the first container.

At operation 410, the computing device provides the first prompt to the first AI agent. In some examples, the computing device provides the first prompt to the first AI agent using a communication path that resides locally within the computing device, without using an external network path. In some examples, an orchestrator provides the first prompt to the first AI agent. The language model of the first AI agent processes the first prompt and generates an output.

At operation 412, the computing device receives the output from the first AI agent. The output includes information from the first container (e.g., grounding information retrieved from the first file, the second file, and/or the first set of embeddings) and excludes information from any files (and/or any containers) that are excluded from (e.g., not included in) the first container. For example, the first AI agent may send a request for grounding information to the orchestrator, in response to which the orchestrator may execute a search query on the files and/or sets of embeddings in the first container and return the search results to the first AI agent as grounding information.

At operation 414, the computing device presents the response in the user interface, such as by displaying the response using a display of the computing device or playing the response using speakers of the computing device.

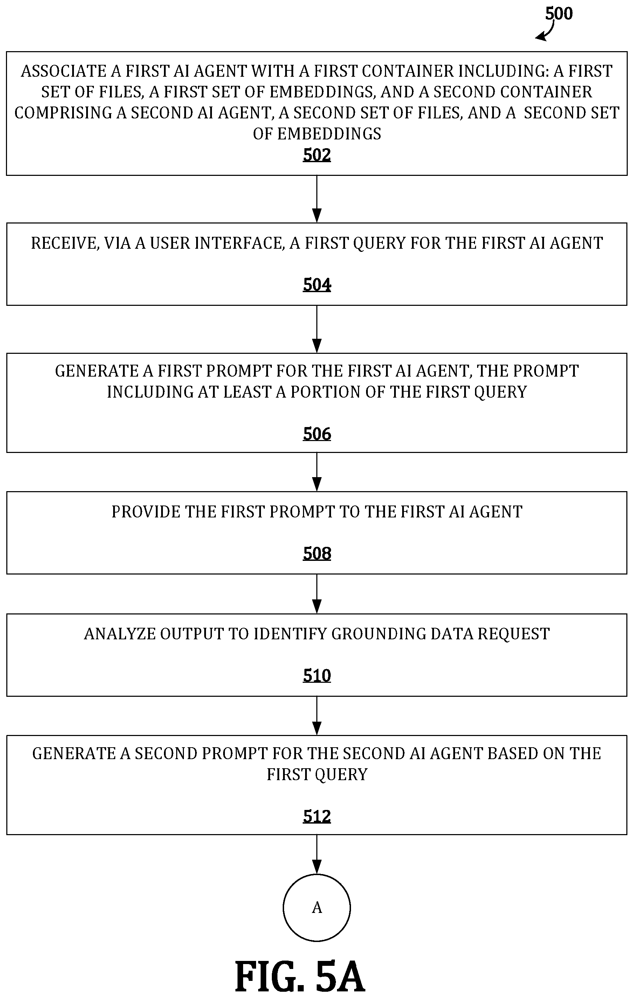

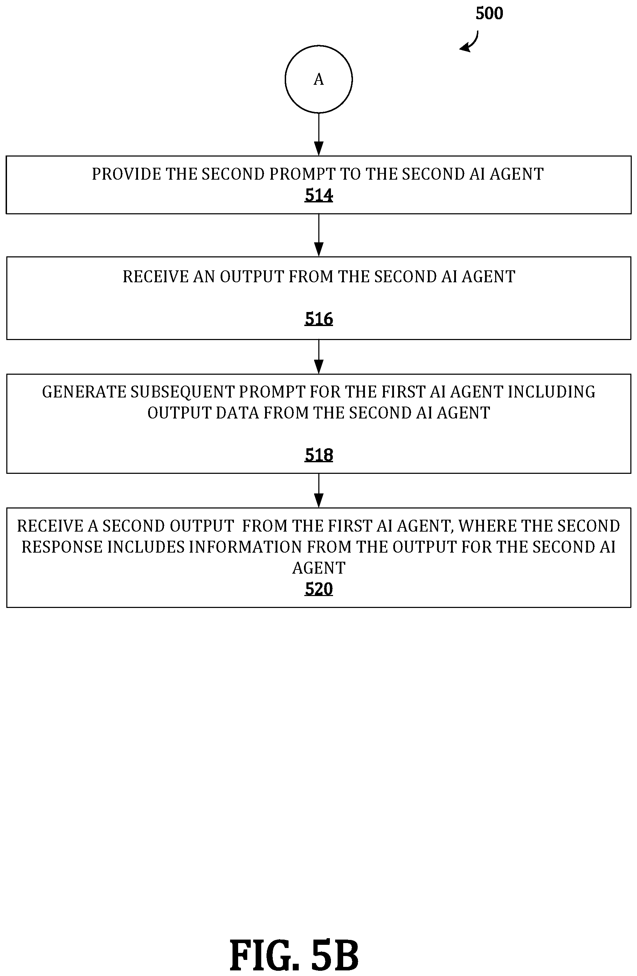

FIGs. 5A-5B depict an example method 500 that may be used for or by isolated AI agents and files. Method 500 may be performed by a computing device, such as computing device 600.

At operation 502, the computing device associates a first AI agent (e.g., first AI agent 302) with a first container (e.g., first container 306) including: a first set of files (e.g., first file 308 and second file 310), a first set of embeddings (e.g., first set of embeddings 311), and a second container (e.g., second container 316) comprising a second AI agent (e.g., second AI agent 314), a second set of files (e.g., third file 318 and fourth file 320), and a second set of embeddings (e.g., second embeddings 320). For example, the computing device associates the first AI agent with the first container by granting permission to the first AI agent to access the files, set of embeddings, and/or AI agents in the first container in response to detecting a user input associating the first AI agent with the first container. In some examples, the first set of embeddings is generated by a machine learning model that semantically analyzes the content in the first file and second file and generates embeddings that represent the semantic content.

At operation 504, the computing device receives, via a user interface (e.g., query interface 202), a first query for the first AI agent. For example, the computing device receives the first query as a natural-language text string or as a verbal input that may be converted to a text string.

At operation 506, the computing device generates a first prompt for the first AI agent, the prompt including at least a portion of the first query. In some examples, an orchestrator (e.g., orchestrator 304) generates the first prompt based on the first query. The first prompt may be based on the custom prompt stored in the first container.

At operation 508, the computing device provides the first prompt to the first AI agent. In some examples, the computing device provides the first prompt to the first AI agent using a communication path that resides locally within the computing device, without using an external network path. In some examples, an orchestrator provides the first prompt to the first AI agent. The language model of the first AI agent then processes the first prompt and generates an output.

At operation 510, the computing device receives the output from the first AI agent and analyzes the output to identify what next operation is to be performed based on the output. The analysis may include applying one or more criteria, rules, and/or heuristics that indicate which operation is to be performed. In method 500, the output includes an indication that additional grounding data is needed. The analysis performed in operation 510 then indicates whether a grounding query is to be executed against the files stored in the first container or whether a second prompt is to be generated for a nested AI agent within the first container. In the example used for method 500, the output from the first AI agent indicates that grounding data is to be generated from the nested AI agent (e.g., the second AI agent).

At operation 512, in accordance with the determination that the output from the first AI agent indicates grounding data is desired from the second AI agent, the computing device generates a second prompt for the second AI model based on the first query. The second prompt may include the first query and/or at least a portion of the output received from the first AI agent. The second prompt may also be generated based on a custom prompt stored in a dedicated container for the second AI agent.

At operation 514, the computing device provides the second prompt to the second AI agent. In some examples, the computing device provides the second prompt to the second AI agent using a communication path that resides locally within the computing device, without using an external network path. In some examples, an orchestrator provides the second prompt to the second AI agent. The language model of second AI agent then processes the second prompt and generates a second output. In some examples, that second output causes the computing device to extract grounding data from the files of the container of the second AI agent. In other examples, such grounding data is not obtained.

At operation 516, the computing device receives an output from the second AI agent. The first response may include information from the third file 318, the fourth file 320, and/or the second set of embeddings 320 in examples where the second AI agent extracted and used its own grounding data. The output may exclude information from any sources that are excluded from the second container 316.

At operation 518, the computing device generates a subsequent prompt for the first AI agent. The subsequent prompt includes at least a portion of the output received from the second AI agent, and the subsequent prompt may include the user query or a portion thereof as well. The output received from the second AI agent is used as grounding data in the subsequent prompt. The language model of the first AI agent then processes the subsequent prompt to generate a second output.

At operation 520, the computing device receives the second output from the first AI model. The second output includes information from the output of the second AI agent that was included as grounding data in the subsequent prompt. In some examples, the second output includes information from the first file 308, the second file 310, and/or the first set of embeddings 311. The computing device may present a response, to the user query, that includes at least a portion of the second output generated by the first AI agent.

FIG. 6 is a block diagram illustrating physical components (e.g., hardware) of an example of a computing device 600 with which examples of the present disclosure may be practiced. The computing device components described below may be suitable for one or more of the components of the systems 100, 200, and/or 300 described above. In a basic configuration, the computing device 600 includes at least one processing unit 602 (e.g., at least one processor) and a system memory 604. Depending on the configuration and type of computing device 600, the system memory 604 may comprise volatile storage (e.g., random access memory), non-volatile storage (e.g., read-only memory), flash memory, or any combination of such memories. In the example of FIG. 6, the system memory 604 includes an operating system 605 and program modules 606 for performing various functionalities, including applications 112.

The operating system 605 may be suitable for controlling the operation of the computing device 600, such as scheduling tasks, controlling peripheral devices, and managing other aspects of software, hardware, and input/output (I/O) on the computing device 600.

Aspects of the disclosure may be practiced in conjunction with a graphics library, other operating systems, or any other application program and is not limited to any particular application or system. This basic configuration is illustrated in FIG. 6 by those components within a dashed line 608. The computing device 600 may have additional features or functionality. For example, the computing device 600 may also include additional data storage devices (removable and/or non-removable) such as, for example, magnetic disks, optical disks, or tape. Such additional storage is illustrated in FIG. 6 by a removable storage device 609 and a non-removable storage device 610.

As stated above, a number of program modules and data files may be stored in the system memory 604. While executing on the processing unit 602, the program modules 606 and/or operating system 605 may perform processes including one or more of the stages of method 400 and/or 500. In some examples, such processes and methods may be distributed across multiple processing units 602, such that each processing unit 602 performs a portion of the processes and methods.

In the example of FIG. 6, the computing device 600 also has one or more input device(s) 612 (such as a keyboard, a mouse, a pen, a sound input device, a touch input device, a camera, etc.) and output device(s) 614 (such as a display screen, speakers, a printer, etc.). The aforementioned devices are examples and others may be used. In some examples, the computing device 600 omits the input device(s) 612 and/or output devices 614. In the example of FIG. 6, the computing device 600 includes one or more communication connections 616 to enable communications with other computing devices. Examples of communication connections 616 include an RF transmitter, receiver, and/or transceiver circuitry; universal serial bus (USB), parallel ports, and/or serial ports.

Examples of the disclosure may be practiced in an electrical circuit comprising discrete electronic elements, packaged or integrated electronic chips containing logic gates, a circuit utilizing a microprocessor, or on a single chip containing electronic elements or microprocessors. For example, examples of the disclosure may be practiced via a system-on-a-chip (SOC) where each or many of the components illustrated in FIG. 6 may be integrated onto a single integrated circuit. Such an SOC device may include one or more processing units, graphics units, communications units, system virtualization units and various application functionality all of which are integrated (or "burned") onto the chip substrate as a single integrated circuit. When operating via an SOC, the functionality, described herein, with respect to providing spatial-textual clustering-based predictive recognition of text in a video may be operated via application-specific logic integrated with other components of the computing device 600 on the single integrated circuit (chip). Examples of the present disclosure may also be practiced using other technologies capable of performing logical operations such as, for example, AND, OR, and NOT, including mechanical, optical, fluidic, and quantum technologies.

The term computer readable media as used herein includes volatile and nonvolatile, removable and non-removable media implemented in any method or technology for storage of information, such as computer readable instructions, data structures, or program modules. The system memory 604, the removable storage devices 609, and the non-removable storage devices 610 of FIG. 6 are all computer readable media examples (e.g., memory storage.) Computer readable media include random access memory (RAM), read-only memory (ROM), electrically erasable programmable ROM (EEPROM), flash memory or other memory technology, CD-ROM, digital versatile disks (DVD) or other optical storage, magnetic cassettes, magnetic tape, magnetic disk storage or other magnetic storage devices, or any other article of manufacture which can be used to store information and which can be accessed by the computing device 600. Any such computer readable media may be part of the computing device 600. In some examples, computer readable media includes non-transitory computer readable media and does not include a carrier wave or other propagated data signal.

Communication media may be embodied by computer readable instructions, data structures, program modules, or other data in a modulated data signal, such as a carrier wave or other transport mechanism, and includes any information delivery media. The term "modulated data signal" may describe a signal that has one or more characteristics set or changed in such a manner as to encode information in the signal. By way of example, communication media may include wired media such as a wired network or direct-wired connection, and wireless media such as acoustic, RF, infrared, and other wireless media.

In an aspect, the technology relates to a computer-implemented method. The method includes: associating a first AI agent with a first container comprising a first set of files and a first set of embeddings representing content of the first set of files; associating a second AI agent with a second container comprising a second set of files and a second set of embeddings representing content of the second set of files; receiving, via a user interface, a first query and an indication of the first container; generating a first prompt for the first AI agent, the first prompt including at least a portion of the first query; providing the first prompt to the first AI agent; receiving a first response from the first AI agent, wherein the first response includes information from the first container and excludes information from files that are excluded from the first container; and presenting the first response in the user interface.

In examples, the first container is a first file folder and associating the first AI agent with the first container comprises linking the first AI agent with the first file folder.

In examples, the method further includes: receiving, via the user interface, a second query and an indication of the second container; generating a second prompt for the second AI agent, the second prompt including at least a portion of the second query; providing the second prompt to the second AI agent; receiving a second response from the second AI agent, where the response includes information from the second container and excludes information from files that are excluded from the first container; and displaying the second response in the user interface.

In examples, the method further includes: receiving a request to delete the first container or the first AI agent; and in response to the request, deleting the first container and the first AI agent.

In examples, the first container comprises a first custom prompt that configures the first AI agent to respond to prompts and the method further includes: providing the first custom prompt to the first AI agent before providing the first prompt to the first AI agent, wherein the first custom prompt configures the first AI agent to generate a response to the first prompt.

In examples, the method further includes: receiving a request to add a third file to the first container; in response to receiving the request to add the third file to the first container: adding the third file to the first container; generating a second set of embeddings based on the third file; and adding the second set of embeddings to the first container.

In examples, the second container includes a second custom prompt that configures the second AI agent to respond to prompts and the method further includes: providing the second custom prompt to the first AI agent; receiving, via the user interface, a third query and an indication of the first container; generating a third prompt for the first AI agent, the third prompt including at least a portion of the third query; providing the third prompt to the first AI agent; receiving a third response from the first AI agent, wherein the third response includes information from the third file and excludes information in files that are excluded from the first container.

In an aspect, the technology relates to a computer-implemented method. The method includes: associating a first AI agent with a first container comprising: a first set of files and a first set of embeddings, and a second container comprising a nested AI agent, a second set of files, and a second set of embeddings, and receiving, via a user interface, a query for the first AI agent; generating a first prompt for the first AI agent, the first prompt including at least a portion of the query; providing the first prompt to the first AI agent; receiving a first output from the first AI agent; analyzing the first output to determine the first output indicates additional data from the nested AI agent; generating a second prompt for the nested AI agent based on the first output from the first AI agent; providing the second prompt to the nested AI agent; receiving an output from the nested AI agent; generating a subsequent prompt for the first AI agent, wherein the subsequent prompt includes the output from the nested AI agent; providing the subsequent prompt to the first AI agent; receiving a second output from the first AI agent, wherein the second output includes information generated from the nested AI agent.

In examples, the first container comprises a first custom prompt that configures the first AI model to respond to prompts and the method further includes: providing the first custom prompt to the first AI model before providing the first prompt to the first AI model.

In examples, the method further includes: receiving a request to delete the first container or the first AI agent; and in response to receiving the request, deleting the first AI agent and deleting the first container including the second container and the nested AI agent.

In examples, the method further includes: receiving a request to delete the second container or the nested AI agent; and in response to receiving the request, deleting the second container and the nested AI agent without deleting the first container and the first AI agent.

In examples, the second container comprises a second custom prompt that configures the nested AI agent to respond to prompts and the method further includes: providing the second custom prompt to the nested AI agent before providing the second prompt to the nested AI agent.

In examples, the method further includes: receiving a request to add a first file to the second container; in response to receiving the request to add the first file to the second container: adding the first file to the second container; generating a third set of embeddings based on the first file; and adding the third set of embeddings to the second container.

In examples, the first AI agent lacks permission to directly access the second set of files in the second container and the nested AI agent lacks permission to directly access the first set of files in the first container.

In an aspect, the technology relates to a system for isolated AI agents and files. The system includes: a processing system; and memory storing instructions that, when executed by the processing system, cause the system to perform operations comprising: associating a first AI agent with a first container comprising a first set of files and a first set of embeddings representing content of the first set of files; associating a second AI agent with a second container comprising a second set of files and a second set of embeddings representing content of the second set of files; receiving, via a user interface, a first query and an indication of the first container; generating a first prompt for the first AI agent, the first prompt including at least a portion of the first query; providing the first prompt to the first AI agent; receiving a first response from the first AI agent, wherein the response includes information from the first container and excludes information from files that are excluded from the first container; and presenting the first response in the user interface.

In examples, the first container is a first file folder and associating the first AI agent with the first container comprises linking the first AI agent with the first file folder.

In examples, the instructions further cause the system to perform operations including: receiving, via the user interface, a second query and an indication of the second container; generating a second prompt for the second AI agent, the second prompt including at least a portion of the second query; providing the second prompt to the second AI agent; receiving a second response from the second AI agent, wherein the response includes information from the second container and excludes information from files that are excluded from the first container; and displaying the second response in the user interface.

In examples, the instructions further cause the system to perform operations including: receiving a request to delete the first container or the first AI agent; and in response to the request, deleting the first container and the first AI agent.

In examples, the first container comprises a first custom prompt, and wherein the instructions further cause the system to perform operations including: providing the first custom prompt to the first AI agent before providing the first prompt to the AI agent, wherein the first custom prompt configures the first AI agent to generate a response to the first prompt.

In examples, the instructions further cause the system to perform operations including: receiving a request to add a third file to the first container; in response to receiving the request to add the third file to the first container, adding the third file to the first container; generating a second set of embeddings based on the third file; and adding the second set of embeddings to the first container.

In examples, a first AI agent is configured to obtain grounding information (e.g., information that will be used, by the first AI agent, to formulate a response to a query) from a first set of files and/or embeddings in a container associated with the AI agent. A second AI agent is configured to obtain grounding information from a second set of files and/or embeddings in a second container. Neither AI agent has access to files that are outside of the container associated with the AI agent. The container may be a folder into which a user can drag and drop files, and therefore the user may have visibility into (and control over) the information that is used as grounding information for each of the AI agents. An AI agent can be nested within a container for another AI agent to provide additional grounding information.

It is to be understood that the methods, modules, and components depicted herein are merely examples. Alternatively, or in addition, the functionality described herein can be performed, at least in part, by one or more hardware logic components. For example, illustrative types of hardware logic components that can be used include Field-Programmable Gate Arrays (FPGAs), Application-Specific Integrated Circuits (ASICs), Application-Specific Standard Products (ASSPs), System-on-a-Chip systems (SOCs), Complex Programmable Logic Devices (CPLDs), etc.

The functionality associated with some examples described in this disclosure can also include instructions stored in a non-transitory media. The term "non-transitory media" as used herein refers to any media storing data and/or instructions that cause a machine to operate in a specific manner. Illustrative non-transitory media include non-volatile media and/or volatile media. Non-volatile media include, for example, a hard disk, a solid-state drive, a magnetic disk or tape, an optical disk or tape, a flash memory, an EPROM, NVRAM, PRAM, or other such media, or networked versions of such media. Volatile media include, for example, dynamic memory such as DRAM, SRAM, a cache, or other such media. Non-transitory media is distinct from transmission media, but can be used in conjunction with transmission media. Transmission media is used for transferring data and/or instruction to or from a machine. Examples of transmission media include coaxial cables, fiber-optic cables, copper wires, and wireless media, such as radio waves.

Furthermore, those skilled in the art will recognize that boundaries between the functionality of the above-described operations are merely illustrative. The functionality of multiple operations may be combined into a single operation, and/or the functionality of a single operation may be distributed in additional operations. Moreover, alternative embodiments may include multiple instances of a particular operation, and the order of operations may be altered in various other embodiments.

Although the disclosure provides specific examples, various modifications and changes can be made without departing from the scope of the disclosure as set forth in the claims below. Accordingly, the specification and figures are to be regarded in an illustrative rather than a restrictive sense, and all such modifications are intended to be included within the scope of the present disclosure. Any benefits, advantages, or solutions to problems that are described herein with regard to a specific example are not intended to be construed as a critical, required, or essential feature or element of any or all the claims.

Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to containing only one such element, even when the same claim includes the introductory phrases "one or more" or "at least one" and indefinite articles such as "a" or "an." The same holds true for the use of definite articles.

Unless stated otherwise, terms such as "first" and "second" are used to arbitrarily distinguish between the elements such terms describe. Thus, these terms are not necessarily intended to indicate temporal or other prioritization of such elements.

## Claims

1. A computer-implemented method, comprising:
associating (402) a first AI agent with a first container comprising a first set of files and a first set of embeddings representing content of the first set of files;
associating (404) a second AI agent with a second container comprising a second set of files and a second set of embeddings representing content of the second set of files;
receiving (406), via a user interface, a first query and an indication of the first container;
generating (408) a first prompt for the first AI agent, the first prompt including at least a portion of the first query;
providing (410) the first prompt to the first AI agent;
receiving (412) a first response from the first AI agent, wherein the first response includes information from the first container and excludes information from files that are excluded from the first container; and
presenting (414) the first response in the user interface.

2. The method of claim 1, wherein the first container is a first file folder and associating the first AI agent with the first container comprises linking the first AI agent with the first file folder.

3. The method of any preceding claim, further comprising:
receiving, via the user interface, a second query and an indication of the second container;
generating a second prompt for the second AI agent, the second prompt including at least a portion of the second query;
providing the second prompt to the second AI agent;
receiving a second response from the second AI agent, wherein the response includes information from the second container and excludes information from files that are excluded from the first container; and
displaying the second response in the user interface.

4. The method of any preceding claim, further comprising:
receiving a request to delete the first container or the first AI agent; and
in response to the request, deleting the first container and the first AI agent.

5. The method of any preceding claim, wherein the first container comprises a first custom prompt that configures the first AI agent to respond to prompts, the method further comprising:
providing the first custom prompt to the first AI agent before providing the first prompt to the first AI agent, wherein the first custom prompt configures the first AI agent to generate a response to the first prompt.

6. The method of claim 5, further comprising:
receiving a request to add a third file to the first container;
in response to receiving the request to add the third file to the first container:
adding the third file to the first container;
generating a second set of embeddings based on the third file; and
adding the second set of embeddings to the first container.

7. The method of claim 6, wherein the second container includes a second custom prompt that configures the second AI agent to respond to prompts, the method further comprising:
providing the second custom prompt to the first AI agent;
receiving, via the user interface, a third query and an indication of the first container;
generating a third prompt for the first AI agent, the third prompt including at least a portion of the third query;
providing the third prompt to the first AI agent;
receiving a third response from the first AI agent, wherein the third response includes information from the third file and excludes information in files that are excluded from the first container.

8. A method, comprising:
associating (502) a first AI agent with a first container comprising:
a first set of files and a first set of embeddings, and
a second container comprising a nested AI agent, a second set of files, and a second set of embeddings, and
receiving (504), via a user interface, a query for the first AI agent;
generating (506) a first prompt for the first AI agent, the first prompt including at least a portion of the query;
providing (508) the first prompt to the first AI agent;
receiving a first output from the first AI agent;
analyzing (510) the first output to determine the first output indicates additional data from the nested AI agent;
generating (512) a second prompt for the nested AI agent based on the first output from the first AI agent;
providing (514) the second prompt to the nested AI agent;
receiving (516) an output from the nested AI agent;
generating (518) a subsequent prompt for the first AI agent, wherein the subsequent prompt includes the output from the nested AI agent;
providing the subsequent prompt to the first AI agent;
receiving (520) a second output from the first AI agent, wherein the second output includes information generated from the nested AI agent.

9. The method of claim 8, wherein the first container comprises a first custom prompt that configures the first AI model to respond to prompts, the method further comprising:
providing the first custom prompt to the first AI model before providing the first prompt to the first AI model.

10. The method of any of claims 8-9, further comprising:
receiving a request to delete the first container or the first AI agent; and
in response to receiving the request, deleting the first AI agent and deleting the first container including the second container and the nested AI agent.

11. The method of any of claims 8-10, further comprising:
receiving a request to delete the second container or the nested AI agent; and
in response to receiving the request, deleting the second container and the nested AI agent without deleting the first container and the first AI agent.

12. The method of any of claims 8-11, wherein the second container comprises a second custom prompt that configures the nested AI agent to respond to prompts, the method further comprising:
providing the second custom prompt to the nested AI agent before providing the second prompt to the nested AI agent.

13. The method of any of claims 8-12, further comprising:
receiving a request to add a first file to the second container;
in response to receiving the request to add the first file to the second container:
adding the first file to the second container;
generating a third set of embeddings based on the first file; and
adding the third set of embeddings to the second container.

14. The method of any of claims 8-13, wherein the first AI agent lacks permission to directly access the second set of files in the second container and the nested AI agent lacks permission to directly access the first set of files in the first container.

15. A system for isolated AI agents and files, the system comprising:
a processing (602) system; and
memory (604) storing instructions that, when executed by the processing system, cause the system to perform operations comprising:
associating a first AI agent with a first container comprising a first set of files and a first set of embeddings representing content of the first set of files;
associating a second AI agent with a second container comprising a second set of files and a second set of embeddings representing content of the second set of files;
receiving, via a user interface, a first query and an indication of the first container;
generating a first prompt for the first AI agent, the first prompt including at least a portion of the first query;
providing the first prompt to the first AI agent;
receiving a first response from the first AI agent, wherein the response includes information from the first container and excludes information from files that are excluded from the first container; and
presenting the first response in the user interface.
